# EUROPÄISCHE PATENTANMELDUNG

(11) **EP 2 944 833 A1**
(43) Veröffentlichungstag der Anmeldung: **18.11.2015**
(21) Anmeldenummer: 15401035.9
(22) Anmeldetag: 04.05.2015
(51) Int. Cl.: F16B 33/00, F16B 37/12, F16B 17/00

(54) **INNENGEWINDENANKER**

(30) Priorität: 12.05.2014 DE 102014106662
(71) Anmelder: fischerwerke GmbH & Co. KG, 72178 Waldachtal (DE)
(72) Erfinder:
(74) Vertreter: Lehmann, David

(57) **Zusammenfassung**

Die Erfindung betrifft einen Innengewindeanker (1) und schlägt zur Abdichtung eines Ankerlochs (18) einen lochscheibenförmigen Dichtflansch (10) vor, der flüssigkeitsdicht an einem Ende des Innengewindeankers (1) angebracht ist und eine kreis- und rillenförmige Vertiefung (14) an einer Unterseite (12) aufweist, die durch Einfüllöffnungen (15) mit einer Dichtmasse (19) verfüllt werden kann.

## Beschreibung

Die Erfindung betrifft einen Innengewindenanker mit den Merkmalen des Oberbegriffs des Anspruchs 1.

Unter einem "Anker" soll ein typischerweise, jedoch nicht zwingend, stabförmiges Bauteil verstanden werden, das in einem Ankerloch in einem Ankergrund verankert, d.h. befestigt ist und zur Befestigung eines Gegenstands am Ankergrund dient. Der Ankergrund besteht oft aus Beton oder Mauerwerk und das Ankerloch ist üblicherweise gebohrt. Allerdings sind auch andere Herstellungen des Ankerlochs möglich. Die Verankerung kann durch Aufspreizen oder chemisch erfolgen, letzteres ist eine Befestigung eines Ankers mit einer aushärtenden bzw. ausgehärteten Masse, beispielsweise einem Ein- oder Mehrkomponentenharz, einem Mörtel oder einem Kunstharzmörtel. Die Aufzählung ist beispielhaft und nicht abschließend. Die Erfindung ist nicht auf Anker beschränkt, die durch Aufspreizen oder chemisch verankert werden bzw. sind.

"Innengewindeanker" bedeutet, dass der Anker ein Innengewinde an einem hier als hinteren bezeichneten Ende zur Befestigung eines Gegenstands am Anker mit einer Schraube, einem Gewindebolzen oder dgl. aufweist. Innengewindeanker werden typischerweise in etwa bündig mit einer Oberfläche des Ankergrunds gesetzt, d.h. ihr hinteres Ende befindet sich in einer Ebene mit einer Oberfläche des Ankergrunds.

Bei einer Verankerung in einem flüssigkeitsdichten Ankergrund bzw. einem Ankergrund, der eine flüssigkeitsdichte Oberfläche aufweist, muss nach einem Bohren das Ankerloch abgedichtet werden. Eine flüssigkeitsdichte Oberfläche kann beispielsweise durch einen flüssigkeitsdichten Anstrich oder eine sonstige flüssigkeitsdichte Schicht oder eine flüssigkeitsdichte Folie oder ein Edelstahlblech erreicht werden. Die Aufzählung ist beispielhaft und nicht abschließend. Flüssigkeitsdichte Ankergründe oder Oberflächen auf Ankergründen gibt es beispielsweise in betonierten Wasserbehältern, Schwimmbädern, Maschinenhallen oder Werkstätten, in letzteren zur Verhinderung des Eindringens von Kraftstoffen, Ölen und sonstigen flüssigen Chemikalien durch einen Boden oder eine Wand in das Erdreich. Anker werden in solchen Ankergründen gesetzt zur Befestigung beispielsweise von Handgriffen, Fußtritten, Aggregaten, Maschinen, Hebebühnen. Auch im Hoch- und im Tiefbau werden Abdichtungen von Ankerlöchern benötigt.

Die Offenlegungsschrift DE 10 2006 000 224 A1 offenbart ein Abdichtelement für einen Anker, der in einem Ankerloch in einem Ankergrund verankert ist und aus dem Ankergrund vorsteht. Das bekannte Abdichtelement weist die Form einer Lochscheibe auf, die an einer Unterseite eine umlaufende, in Ansicht herzförmige Rille aufweist, die ein Mittelloch der Lochscheibe umschließt. Die Unterseite des Abdichtelements liegt am Ankergrund an, wenn das Abdichtelement in vorgesehener Weise angeordnet ist. In die Rinne mündet ein Loch als Einfüllöffnung, das durch das Abdichtelement durchgeht und somit von einer der Unterseite gegenüberliegenden Oberseite des Abdichtelements zugänglich ist. Das als Lochscheibe ausgeführte Abdichtelement wird auf einen Anker, der in einem Ankerloch in einem Ankergrund verankert ist und aus dem Ankergrund vorsteht, aufgesetzt, so dass die Unterseite des Abdichtelements an dem Ankergrund anliegt. Durch die Einfüllöffnung wird eine aushärtende Dichtmasse in die Rinne in der Unterseite des Abdichtelements eingebracht, so dass sich die Dichtmasse in Längsrichtung der Rinne verteilt und den Anker umschließt und zwischen dem Abdichtelement und dem Ankergrund abdichtet. Die Dichtmasse muss auch den Anker vollständig umfließen, um zwischen dem Abdichtelement und dem das Mittelloch des Abdichtelements durchsetzenden Anker abzudichten.

Aufgabe der Erfindung ist, einen Innengewindeanker mit einer Abdichtungsmöglichkeit eines Ankerlochs vorzuschlagen.

Diese Aufgabe wird erfindungsgemäß durch die Merkmale des Anspruchs 1 gelöst. Der erfindungsgemäße Innengewindeanker weist einen Dichtflansch an seinem hinteren, d.h. das Innengewinde aufweisenden Ende auf. Der Dichtflansch ist flüssigkeitsdicht am hinteren Ende des Innengewindeankers angeordnet, so dass keine Flüssigkeit zwischen dem Innengewindeanker und dem Dichtflansch durchtreten kann. Vorzugsweise ist der Dichtflansch starr und in einer Radialebene des Innengewindeankers am Innengewindeanker angeordnet, beispielsweise ist der Dichtflansch einstückig mit dem Innengewindeanker oder er ist stoffschlüssig beispielsweise durch Kleben, Löten oder Schweißen mit dem Innengewindeanker verbunden. Weitere Möglichkeiten sind eine Schraubverbindung oder ein Nieten. Der Dichtflansch kann auch kraftschlüssig am hinteren Ende des Innengewindeankers angeordnet, beispielsweise aufgepresst oder aufgeschrumpft sein. Die Aufzählung ist nicht abschließend. Auch kann der Dichtflansch (begrenzt) schwenkbar am hinteren Ende des Innengewindeankers angeordnet sein, beispielsweise durch eine Elastizität oder plastische Verformbarkeit, um eine Schrägstellung des Ankers auszugleichen. Die Aufzählung ist beispielhaft und nicht abschließend.

An einer Unterseite weist der Dichtflansch des erfindungsgemäßen Innengewindeankers eine umlaufende Vertiefung für die Aufnahme einer Dichtmasse auf. Die Vertiefung in der Unterseite umschließt den Innengewindeanker in Umfangsrichtung ohne Unterbrechung. Die Unterseite des Dichtflanschs liegt an einem Ankergrund an, wenn der Innengewindeanker in vorgesehener Weise in einem Ankerloch im Ankergrund verankert ist. Die Vertiefung weist beispielsweise die Form einer den Innengewindeanker umschließenden Rille auf. Zur Abdichtung wird eine fließfähige, beispielsweise pastöse und aushärtende Dichtmasse in die Vertiefung so eingebracht, dass sie den Innengewindeanker in Umfangsrichtung ohne Unterbrechung umschließt und zwischen dem Dichtflansch und dem Ankergrund abdichtet. Das Ankerloch, in dem der Innengewindeanker verankert ist, ist auf diese Weise abgedichtet. Die Dichtmasse kann aus demselben Material wie eine Dichtschicht auf der Oberfläche des Ankergrunds bestehen, wenn die Dichtschicht beispielsweise aus einem Harz oder Bitumen besteht oder eine Kunststofffolie ist. Die Dichtmasse kann auch aus einem anderen Material, beispielsweise aus Silikon, bestehen. Die Dichtmasse muss beständig gegen etwaige Chemikalien, mit der sie in Berührung kommen kann, sein, und dauerhaft abdichten. Vorzugsweise, jedoch nicht zwingend, ist die Dichtmasse nach dem Abbinden dauerelastisch.

Der Dichtflansch weist vorzugsweise die Form einer Lochscheibe auf. Das hat den Vorteil bei geringer Dicke einer nur kleinen Erhebung auf der Oberfläche des Ankergrunds. Außerdem bietet ein lochscheibenförmiger Dichtflansch eine gute Anlagefläche für einen zu befestigenden bzw. befestigten Gegenstand, wenn der Dichtflansch eine ebene und zur Unterseite parallele Oberseite aufweist. Andere Formen des Dichtflanschs sind nicht ausgeschlossen, der Dichtflansch muss nicht scheiben- oder plattenförmig sein, was er allerdings vorzugsweise ist.

In bevorzugter Ausgestaltung der Erfindung weist der Dichtflansch eine Einfüllöffnung auf, die von der Oberseite des Dichtflanschs ausgeht und in die Vertiefung für die Dichtmasse an der Unterseite des Dichtflanschs mündet. Eine Weiterbildung der Erfindung sieht mindestens drei auf einer Länge der Vertiefung vorzugsweise gleichmäßig verteilt angeordnete Einfüllöffnungen vor. Durch die Einfüllöffnung/en wird die Dichtmasse in die Vertiefung eingebracht, nachdem der Innengewindeanker in das Ankerloch im Ankergrund eingebracht worden ist. Mehrere Einfüllöffnungen erleichtern das Einfüllen der Dichtmasse so, dass sich die Dichtmasse über die Länge der Vertiefung in der Unterseite des Dichtflanschs ohne Unterbrechung verteilt.

Eine Ausgestaltung der Erfindung sieht eine Gleitscheibe an der Unterseite des Dichtflanschs vor, die sich innerhalb der umlaufenden Vertiefung an der Unterseite des Dichtflanschs befindet, so dass die Dichtmasse außerhalb der Gleitscheibe zwischen dem Dichtflansch und dem Ankergrund abdichtet. Die Gleitscheibe vermindert eine Reibung zwischen dem Dichtflansch und dem Ankergrund, so dass der Innengewindeanker leichter drehbar ist, um beispielsweise eine Konusmutter durch Drehung des Innengewindeankers in eine Spreizhülse des Innengewindeankers einzuziehen, um die Spreizhülse aufzuspreizen und den Innengewindeanker im Ankerloch zu verankern. Das Drehen des Innengewindeankers zum Aufspreizen erfolgt vor dem Einbringen der Dichtmasse in die Vertiefung in der Unterseite des Dichtflanschs oder jedenfalls vor einem Aushärten der Dichtmasse. Wird der Innengewindeanker zur Verankerung nicht gedreht, ist vorzugsweise keine Gleitscheibe vorgesehen.

Vorzugsweise ist der Dichtflansch dünn, damit er sich wenig über eine Oberfläche des Ankergrunds erhebt, wenn seine Unterseite am Ankergrund anliegt. Eine Ausgestaltung der Erfindung sieht vor, dass der Dichtflansch höchstens ½ so dick ist wie ein Durchmesser des Innengewindeankers am hinteren, das Innengewinde aufweisenden Ende.

Die Erfindung wird nachfolgend anhand eines in der Zeichnung dargestellten Ausführungsbeispiels näher erläutert. Es zeigen:
- Figur 1: einen erfindungsgemäßen Innengewindeanker im Achsschnitt; und

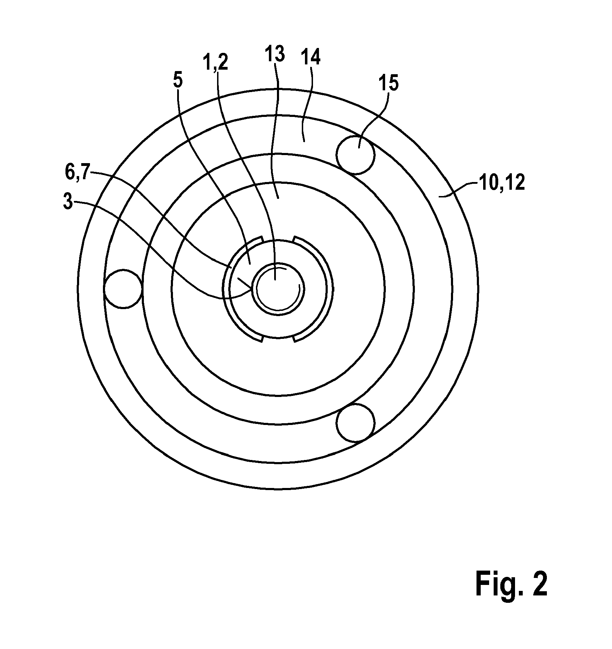

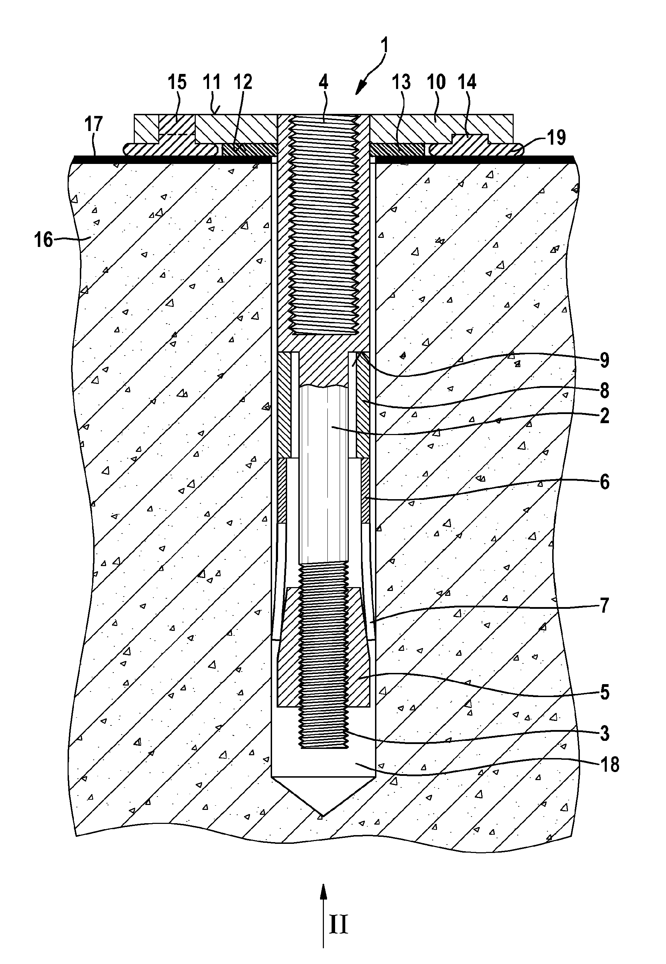

- Figur 2: eine Stirnansicht des Innengewindeankers aus Figur 1 gemäß Pfeil II in Figur 1.

Der in der Zeichnung dargestellte, erfindungsgemäße Innengewindeanker 1 weist einen durchmessergestuften Schaft 2 mit einem Außengewinde 3 an einem hier als vorderen bezeichneten Ende auf und ist an einem gegenüberliegenden, hier als hinterem bezeichneten Ende hohl ausgebildet und weist dort ein Innengewinde 4 zur Befestigung eines nicht dargestellten Gegenstands auf. Auf das Außengewinde 3 ist eine Konusmutter 5 geschraubt, die allgemein auch als Spreizkörper aufgefasst werden kann. Im Anschluss an die Konusmutter 5 ist eine Spreizhülse 6 auf dem Schaft 2 angeordnet, die durch Längsschlitze in Spreizzungen 7 unterteilt ist, die durch Einziehen der Konusmutter 5 zwischen die Spreizzungen 7 nach außen drückbar, d.h. aufspreizbar sind. Die Spreizhülse 6 stützt sich axial über eine Distanzhülse 8 an einer Ringschulter 9 des Schafts 2 ab.

Am hinteren Ende weist der Innengewindeanker 1 einen lochscheibenförmigen Dichtflansch 10 auf, der durch Aufschrumpfen, Aufpressen, Löten oder Schweißen starr mit dem hinteren Ende des Schafts 2 verbunden und hermetisch abgedichtet ist. Der Dichtflansch 10 ist bündig mit dem hinteren Ende des Schafts 2. Der Dichtflansch 10 ist dünn, im dargestellten Ausführungsbeispiel ist seine Dicke weniger als 1/3 eines Durchmessers des Schafts 2 am hinteren Ende. Eine Oberseite 11 und eine Unterseite 12 des Dichtflanschs 10 sind ebene und zueinander parallele Flächen. Als Unterseite 12 wird die Seite des Dichtflanschs 10 bezeichnet, die in Richtung des Innengewindeankers 1 weist.

An der Unterseite 12 des Dichtflanschs 10 ist eine lochscheibenförmige Gleitscheibe 13 beispielsweise aus Kunststoff auf dem Schaft 2 angeordnet, die einen kleineren Durchmesser als der Dichtflansch 10 aufweist.

Radial außerhalb der Gleitscheibe 13 weist der Dichtflansch 10 an seiner Unterseite 12 eine umlaufende Vertiefung 14 auf, die den Innengewindeanker 1 bzw. dessen Schaft 2 in Umfangsrichtung ohne Unterbrechung umschließt. Im Ausführungsbeispiel ist die Vertiefung 14 als kreisförmige, konzentrische und die Gleitscheibe 12 umschließende Rille mit einem flachen Rechteckquerschnitt ausgeführt. Äquidistant an drei Stellen münden Einfüllöffnungen 15 in die Vertiefung 14. Die Einfüllöffnungen 15 sind Löcher, die von der Oberseite 11 des Dichtflanschs 10 ausgehen und in die Vertiefung 14 an der Unterseite 12 des Dichtflanschs 10 münden.

Der erfindungsgemäße Innengewindeanker 1 ist zur Verankerung in einem Ankergrund 16 beispielsweise aus Beton vorgesehen, der eine flüssigkeitsdichte Schicht 17 an seiner Oberfläche aufweist. Die flüssigkeitsdichte Schicht 17 kann beispielsweise ein Anstrich, eine Harzschicht, Bitumen, eine Kunststofffolie oder Edelstahlblech sein. Zur Verankerung wird ein Ankerloch 18 durch die flüssigkeitsdichte Schicht 17 in den Ankergrund 16 gebohrt und der Innengewindeanker 1 in das Ankerloch 18 eingebracht, so dass die Gleitscheibe 13 auf der flüssigkeitsdichten Schicht 17 und der Dichtflansch 10 auf der Gleitscheibe 13 anliegen. Durch Drehung des Innengewindeankers 1 wird das Außengewinde 3 seines Schafts 2 in die Konusmutter 5 eingeschraubt und die Konusmutter 5 zwischen die Spreizzungen 7 der Spreizhülse 6 gezogen. Dabei spreizt die Konusmutter 5 die Spreizhülse 6 bzw. deren Spreizzungen 7 auf, so dass der Innengewindeanker 1 im Ankergrund 16 verankert ist. Zum Drehen des Innengewindeankers 1 kann beispielsweise eine nicht dargestellte Schraube in das Innengewinde 4 eingeschraubt werden, so dass ein Schraubenkopf auf dem hinteren Ende des Innengewindeankers 1 aufsitzt und zum Aufbringen eines Drehmoments genutzt werden kann. Die Schraube wird anschließend wieder ausgeschraubt. Die Gleitscheibe 13 zwischen dem Dichtflansch 10 und der flüssigkeitsdichten Schicht 17 vermindert eine Reibung zwischen dem Dichtflansch 10 und der flüssigkeitsdichten Schicht 17 und verringert dadurch ein zum Drehen des Innengewindeankers 1 erforderliches Drehmoment. Außerdem vermeidet die Gleitscheibe 13 eine Beschädigung der flüssigkeitsdichten Schicht 17 durch den mit dem Innengewindeanker 1 mitdrehenden Dichtflansch 10, beispielsweise ein Einschneiden eines Rands des Dichtflanschs 10 in die flüssigkeitsdichte Schicht 17. Nach der Verankerung wird eine fließfähige, aushärtende Dichtmasse 19 durch die Einfüllöffnungen 15 in die Vertiefung 14 an der Unterseite 12 des Dichtflanschs 10 eingebracht. Die Dichtmasse 19 verteilt sich in Umfangsrichtung so, dass sie den Innengewindeanker 1 außerhalb der Gleitscheibe 13 in Umfangsrichtung ohne Unterbrechung umschließt und zwischen dem Dichtflansch 10 und der flüssigkeitsdichten Schicht 17 abdichtet. Auf diese Weise ist die flüssigkeitsdichte Schicht 17 an der Stelle, an der sie vom Innengewindeanker 1 durchsetzt ist, abgedichtet. Am Innengewinde 4 des Innengewindeankers 1, der im Ankergrund 16 verankert ist, kann ein nicht dargestellter Gegenstand befestigt werden.

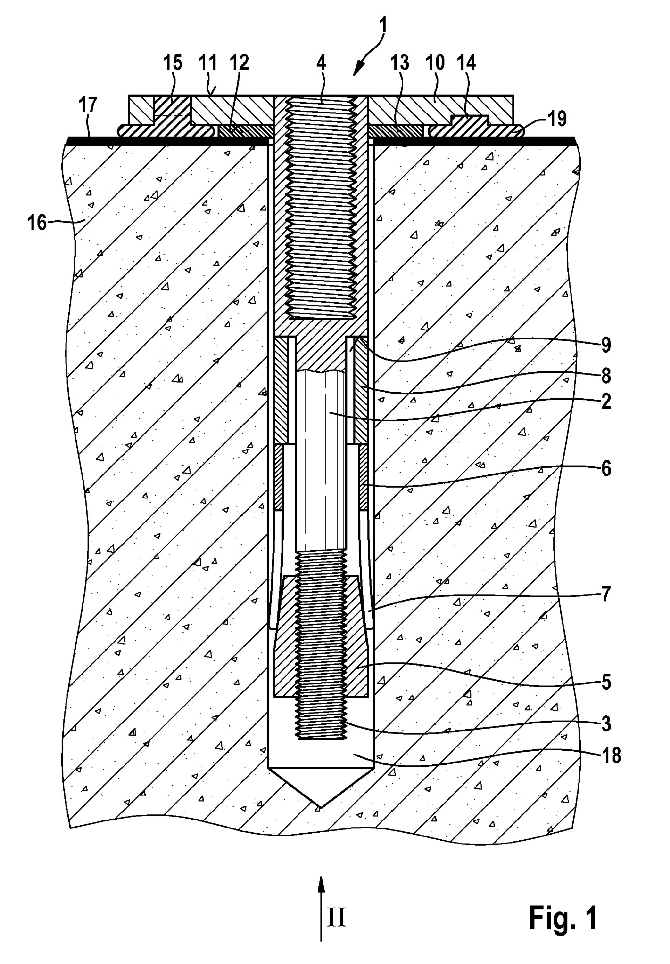

Die Dichtmasse 19 kann wie in Figur 1 zu sehen, zwischen dem Dichtflansch 10 und der flüssigkeitsdichten Schicht 17 radial nach innen und/oder nach außen aus der Vertiefung 14 austreten, so dass zuverlässig eine gute Abdichtung erzielt wird. Ist die Dichtmasse 19 am Außenrand des Dichtflanschs 10 zu sehen, lässt sich optisch kontrollieren, ob sie in Umfangsrichtung geschlossen ist und keine Unterbrechung aufweist.

### Bezugszeichenliste

### Innengewindenanker

- 1: Innengewindeanker
- 2: Schaft
- 3: Außengewinde
- 4: Innengewinde
- 5: Konusmutter
- 6: Spreizhülse
- 7: Spreizzunge
- 8: Distanzhülse
- 9: Ringschulter
- 10: Dichtflansch
- 11: Oberseite des Dichtflanschs 10
- 12: Unterseite des Dichtflanschs 10
- 13: Gleitscheibe
- 14: Vertiefung
- 15: Einfüllöffnung
- 16: Ankergrund
- 17: flüssigkeitsdichte Schicht
- 18: Ankerloch
- 19: Dichtmasse

## Patentansprüche

1. Innengewindenanker mit einem Innengewinde (4) zur Befestigung eines Gegenstands am Innengewindeanker (1), **dadurch gekennzeichnet, dass** der Innengewindeanker (1) einen Dichtflansch (10) an einem Ende aufweist, das das Innengewinde (4) aufweist, der flüssigkeitsdicht am Ende des Innengewindeankers (1) angeordnet ist und dass der Dichtflansch (10) eine umlaufende Vertiefung (14) an einer Unterseite (12) aufweist.

2. Innengewindeanker nach Anspruch 1, **dadurch gekennzeichnet, dass** der Dichtflansch (10) eine Einfüllöffnung (15) aufweist, die von einer Oberseite (11) des Dichtflanschs (10) in die Vertiefung (14) führt.

3. Innengewindeanker nach Anspruch 2, **dadurch gekennzeichnet, dass** der Dichtflansch (10) mindestens drei über den Umfang verteilte Einfüllöffnungen (15) aufweist.

4. Innengewindeanker nach einem der Ansprüche 1-3, **dadurch gekennzeichnet, dass** der Dichtflansch (10) eine Lochscheibe ist, die stoffschlüssig, durch Aufpressen oder durch Aufschrumpfen mit dem das Innengewinde (4) aufweisenden Ende des Innengewindeankers (1) verbunden ist.

5. Innengewindeanker nach einem der vorhergehenden Ansprüche, **dadurch gekennzeichnet, dass** an der Unterseite (12) des Dichtflanschs (10) eine Gleitscheibe (13) angeordnet ist, die von der Vertiefung (14) an der Unterseite (12) des Dichtflanschs (10) umschlossen ist.

6. Innengewindeanker nach einem der vorhergehenden Ansprüche, **dadurch gekennzeichnet, dass** der Dichtflansch (10) höchstens 1/2 und vorzugsweise 1/3 oder weniger so dick ist wie ein Durchmesser des Innengewindeankers (1) an dem das Innengewinde (4) aufweisenden Ende.
